(19) Europäisches Patentamt
European Patent Office
Office européen des brevets

(11) EP 3 480 757 A1

(12) EUROPEAN PATENT APPLICATION

(43) Date of publication:
08.05.2019 Bulletin 2019/19

(51) Int Cl.:
G06Q 10/10 (2012.01)

(21) Application number: 18215302.3

(22) Date of filing: 27.02.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 19.03.2013 KR 20130029261

(62) Document number(s) of the earlier application(s) in
accordance with Art. 76 EPC:
14156911.1 / 2 782 057

(71) Applicant: Samsung Electronics Co., Ltd.
Suwon-si, Gyeonggi-do, 16677 (KR)

(72) Inventors:
• KANG, Sang-wook
  Gyeonggi-do (KR)

• KIM, Hue-yin
  Gyeonggi-do (KR)
• CHAKOO, Nalin
  Gyeonggi-do (KR)
• CHOI, Il-hwan
  Gyeonggi-do (KR)

(74) Representative: Appleyard Lees IP LLP
15 Clare Road
Halifax HX1 2HY (GB)

Remarks:
This application was filed on 21-12-2018 as a
divisional application to the application mentioned
under INID code 62.

(54) **DISPLAY APPARATUS AND METHOD FOR DISPLAYING INFORMATION REGARDING ACTIVITIES THEREOF**

(57)    A display apparatus is provided, which includes a display; a storage storing information regarding user activities performed in the display apparatus for a time period; and a controller analyzing a pattern of the user activities performed for the time period based on the information regarding the activities, dividing the time period into a plurality of time periods based on the analyzed pattern, and controlling the display to display the information regarding the activities that belong to the respective divided time periods.

## FIG. 1

100

110    130    120

DISPLAY ↔ CONTROLLER ↔ STORAGE

**Description**

CROSS REFERENCE TO RELATED APPLICATION

This application claims priority from Korean Patent Application No. 10-2013-0029261 filed on March 19, 2013, in the Korean Intellectual Property Office, the disclosure of which is incorporated herein by reference in its entirety.

BACKGROUND

**1. Field**

Apparatuses and methods consistent with exemplary embodiments relate to a display apparatus and a method for displaying information regarding activities thereof, and more particularly to a display apparatus and a method for displaying information regarding activities thereof, which can display information regarding various activities of users.

**2. Description of the Related Art**

With the development of electronic technology, users can perform various activities through display devices. For example, users can reproduce moving images or take pictures through the display device.

Display devices in the related art provide information regarding activities performed by users in various ways, for example, activity titles, activity occurrence times, and the like, to the users. In this case, most display devices provide the information regarding the activities to the users simply in the order of activity occurrence times.

Due to this, display devices are unable to provide the information regarding the activities that are meaningful to the users.

SUMMARY

The present disclosure has been made to address at least the above problems and/or disadvantages and to provide at least the advantages described below. Accordingly, an aspect of the present disclosure provides a display apparatus and a method for displaying information regarding activities thereof, which can provide the information regarding the activities based on a pattern of the user's activities.

According to one aspect of the present disclosure, a display apparatus comprises a display; a storage which is configured to store information regarding user activities performed in the display apparatus for a predetermined time period; and a controller which is configured to analyze a pattern of the user activities performed for the predetermined time period based on the information regarding the user activities, divide the time period into a plurality of time periods based on the analyzed pattern, and control the display to display the information regarding the user activities that belong to the respective divided time periods.

The user activities may comprise at least one from among content execution, content generation, content transmission, and content reception, and the information regarding the user activities may comprise at least one from among times when the user activities occur, a number of times the user activities occur, and positions where the user activities occur.

The controller may divide the time period into a plurality of unit time periods, analyze a pattern of user activities which belong to at least one successive unit time period, and divide the time period into the at least one successive unit time period based on a result of the analysis.

The controller may analyze the pattern of the user activities based on at least one from among times when the user's activities occur, positions where the user activities occur, and a number of times the user activities occur, which belong to the at least one successive unit time period.

The controller may calculate activity costs for the at least one successive unit time period through an equation to analyze the pattern of the user's activities, and divide the time period into the at least one successive unit time period so that a sum of the calculated activity costs is minimized, the equation being:

$$C(S_i) = c(a_1^i a_2^i \cdots a_{n_i}^i \mid n, u, t, d) = \alpha \cdot \sum_{j=1}^{n_i} \log \frac{n_i + u}{f_i(a_j^i) + 1} + \beta \cdot \log(t_j^i) + \gamma \cdot \log(d_j^i) + \delta \log n$$

Here, $f_i\left(a_j^i\right)$ denotes a frequency of an activity *j* (*j* is a natural number) belonging to *Ai* (unit time periods, where *i* is a natural number), *ni* denotes the number of activities belonging to *Ai*, *n* denotes the number of activities belonging to a predetermined time period, *u* denotes the number of different activities belonging to the predetermined time period, $t_j^i$ denotes a time difference occurring between an activity *j* and an activity *j* -1, and $d_j^i$ denotes a distance between positions where the activity *j* and the activity *j* -1 occur.

The controller may extract at least a part of the user activities belonging to the respective divided time periods based on a preference of the user activities, and control the display to display the information regarding the extracted activities.

According to another aspect of the present disclosure, a method for displaying information regarding activities of a display apparatus, includes storing information regarding user activities performed in the display apparatus for a time period; analyzing a pattern of the user activities performed for the time period based on the information regarding the user activities, and dividing the time period into a plurality of time periods based on the analyzed pattern; and displaying the information regarding the user activities that belong to the respective divided time periods.

The user activities may comprise at least one from among content execution, content generation, content transmission, and content reception, and the information regarding the user activities may comprise at least one from among times when the user activities occur, the number of times the user activities occur, and positions where the user activities occur.

The dividing may comprise dividing the predetermined time period into a plurality of unit time periods, analyzing a pattern of user activities which belong to at least one successive unit time period, and dividing the time period into the at least one successive unit time period based on a result of the analysis.

The dividing may comprise analyzing the pattern of the user activities based on at least one from among times when the user activities occur, positions where the user activities occur, and the number of times the user's activities occur, which belong to the at least one successive unit time period.

The dividing may comprise calculating activity costs for the at least one successive unit time period through an equation to analyze the pattern of the user activities, and dividing the predetermined time period into the at least one successive unit time period so that a sum of the calculated activity costs is minimized, the equation being:

$$C(S_i) = c(a_1^i a_2^i \cdots a_{n_i}^i \mid n, u, t, d) = \alpha \cdot \sum_{j=1}^{n_i} \log \frac{n_i + u}{f_i(a_j^i) + 1} + \beta \cdot \log(t_j^i) + \gamma \cdot \log(d_j^i) + \delta \log n$$

Here, $f_i(a_j^i)$ denotes the frequency of an activity *j* (*j* being a natural number) belonging to *Ai* (unit time periods, where *i* is a natural number), *ni* denotes the number of activities belonging to *Ai, n* denotes the number of activities belonging to a predetermined time period, *u* denotes the number of different activities belonging to the predetermined time period, $t_j^i$ denotes a time difference occurring between an activity *j* and an activity *j* -1, and $d_j^i$ denotes a distance between positions where the activity *j* and the activity *j* -1 occur.

The displaying may comprise extracting at least a part of the activities belonging to the respective divided time periods based on a preference of the activities, and displaying the information regarding the extracted activities.

According to an exemplary embodiment, the time period may be predetermined.

According to an exemplary embodiment, when the information regarding the user activities that belong to the respective time periods is selected, the controller may at least one from among re-perform at least one activity performed in the respective time periods, control to display detailed information regarding the activities performed in the respective time periods, and control to display a result of activity performance.

According to an exemplary embodiment, a part of the user activities is extracted at least based on a user preference.

The user preference may be based on at least a number of times content is downloaded by another user from a content providing server.

According to another aspect of the present disclosure, a display apparatus comprises: a display; and a controller which is configured to analyze a pattern of user activities performed for a time period based on the information regarding the user activities, divide the time period into a plurality of time periods based on the analyzed pattern, and control the display to display the information regarding the user activities that belong to the respective divided time periods.

According to the various exemplary embodiments of the present disclosure as described above, the information regarding the activities can be provided to a user for respective time periods that are meaningful to the user. Accordingly, the user can easily search for the user's activities, and thus the user satisfaction can be improved.

BRIEF DESCRIPTION OF THE DRAWINGS

The above and other aspects, features and advantages of the present disclosure will be more apparent from the following detailed description when taken in conjunction with the accompanying drawings, in which:

FIG. 1 is a block diagram illustrating the configuration of a display device according to an exemplary embodiment of the present disclosure;

FIGS. 2A to 2D are diagrams explaining a method for dividing a time period in which activities occur into time periods that are meaningful to a user in accordance with user's activities according to an exemplary embodiment of the present disclosure;

FIGS. 3A to 3C and 4A to 4B are diagrams explaining a method for displaying information regarding activities for respective time periods according to an exemplary embodiment of the present disclosure;

FIGS. 5 and 6 are flowcharts illustrating a method for displaying information regarding activities according to an exemplary embodiment of the present disclosure;

FIG. 7 is a block diagram illustrating the detailed configuration of a display device according to an exemplary embodiment of the present disclosure;

FIG. 8 is a diagram explaining an example that a display device provides information regarding activities to a user in association with an external device according to an exemplary embodiment of the present disclosure;

FIGS. 9A and 9B are diagrams explaining a server according to an exemplary embodiment of the present disclosure; and

FIG. 10 is a flowchart illustrating a method for displaying information regarding activities of a display device according to an exemplary embodiment of the present disclosure.

DETAILED DESCRIPTION OF EXEMPLARY EMBODIMENTS

Hereinafter, exemplary embodiments of the present disclosure are described in detail with reference to the accompanying drawings.

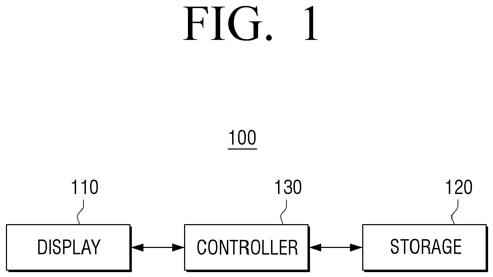

FIG. 1 is a block diagram illustrating the configuration of a display apparatus according to an exemplary embodiment of the present disclosure. Referring to FIG. 1, a display apparatus 100 includes a display 110, a storage 120, and a controller 130. The display apparatus 100 of FIG. 1 may be implemented by various types of electronic devices, such as a TV, a smart phone, a desktop PC, a notebook computer, and a tablet PC.

The display 110 displays various screens. For example, the display 110 may display execution screens of various types of content, such as moving images, music, images, texts, and games, and web browsing screens.

Further, the display 110 displays a GUI for receiving an input of user commands. That is, the display 110 may display a GUI for receiving an input of various user commands, such as content execution, content generation, content transmission, and content reception. In this case, the display 110 may be implemented in the form of a touch screen.

Further, the display 110 may display information regarding activities. In this case, the display 110 may divide a predetermined time period in which the activities occur into a plurality of time periods, and may display the information regarding the activities that belong to the respective time periods for the respective time periods. This will be described in detail later.

For this, the display 110 may be implemented by a liquid crystal display (LCD), an organic light emitting display (OLED), or a plasma display panel (PDP).

The storage 120 stores various data and execution programs for driving and controlling the display apparatus 100.

Further, the storage 120 stores various types of content, such as moving images, music, images, texts, and games, and various application programs for executing the corresponding content. Further, the storage 120 stores an application program that can access a server (e.g., an SNS (Social Network Service) server, a mail server, or a content providing server) and perform web browsing.

Further, the storage 120 stores information regarding user's activities that are performed in the display apparatus 100 for a predetermined time period.

Here, the predetermined time period may be determined, for example, one month or one year, by the user. Further, a time point when one of the user's activities is performed in the display apparatus 100 may be a start of the predetermined period.

Further, the activities may include various functions that are performed by the user in the display apparatus 100.

For example, the activities may include at least one of content execution, content generation, content transmission, and content reception. Here, the content may include moving images, music, images, texts, and games, and the content execution, content generation, content transmission, and content reception may be performed through application programs pre-stored in the display apparatus 100.

Specifically, the content execution includes reproduction or execution of moving images, music, photographs, texts, or games through the display apparatus 100, and the content generation includes generation of moving images, music, images, or texts through the display apparatus 100.

Further, the content transmission includes transmission of the moving images, music, photographs or texts to an external device (not illustrated, e.g., another device, or a server, such as a SNS (Social Network Service) server, a mail server, or a content providing server) through the display apparatus 100, and the content reception includes reception of the moving images, music, photographs, or texts from the external device (not illustrated). For example, the content transmission and reception may include writing of a notice or comments by accessing the SNS server and uploading and downloading of content. However, these are merely exemplary, and the activities may include various operations that can be performed through the display apparatus.

For example, if a user makes a phone call with another user through the display apparatus 100, the phone call may correspond to the activity. Further, if the user transmits a SMS (Short Message Service) message to another user or receives a SMS message from another user through the display device 100, the transmission and reception of the SMS message may correspond to the activities.

Further, even if the user sets a communication method of the display apparatus 100, this may correspond to the activity. For example, if the user sets the communication method of the display apparatus 100 to Wi-Fi, that is, if a Wi-Fi communication module (not illustrated) provided in the display apparatus 100 is activated, the activation of the Wi-Fi communication module (not illustrated) may correspond to the activity.

Further, if the user touches the screen of the display 110, the touch operation may correspond to the activity, and if the user connects an external power supply to the display apparatus 100 to supply power to the display apparatus 100, the connection of the external power may be the activity.

As described above, the activities may include various operations that can be performed through the display apparatus 100.

On the other hand, information regarding the activities may include various kinds of information related to the activities performed through the display apparatus 100. For example, the information regarding the activities may include at least one of activity titles, times when the activities occur, the number of times the activities occur, and positions where the activities occur (e.g., GPS position).

However, they are merely exemplary, and the information regarding the activities may further include kinds of activities and durations when the activities are performed. Further, the state of the display apparatus 100 during performing of the activity may be included in the information regarding the activities. For example, the power supply state of the display apparatus 100 (i.e., the residual quantity of a battery capacity or the set communication method) during performing of the activity may be included in the state of the display apparatus 100.

The controller 130 controls the overall operation of the display apparatus 100. The controller 130 may include a CPU (Central Processing Unit), a module for controlling the display apparatus 100, a ROM (Read Only Memory) and a RAM (Random Access Memory) for storing data.

Specifically, the controller 130 may perform the activity that corresponds to a user command, and store the information regarding the performed activity in the storage 120.

For example, the controller 130 may store information regarding the title of a reproduced moving image, a duration when the moving image is reproduced, the number of times the moving image is reproduced, a position where the moving image is reproduced in the storage 120.

As another example, the controller 130 may upload a text to the SNS server according to the user command. That is, the controller 130 may upload a notice to the user accounts of the SNS server, or upload comments to the notice (or comments) written in the user accounts or other user accounts. In this case, the controller 130 may store information regarding the SNS title to which the text is uploaded, SNS account information to which the text is uploaded, and the time, the position, and the number of times the user uploads the text.

As described above, if the activity occurs in the display apparatus 100, the controller 130 may store the information regarding the activity in the storage 120. Accordingly, the information regarding the activity remains in the storage 120 as a log.

On the other hand, the controller 130 may analyze a pattern of user's activities performed during a predetermined time based on the information regarding the activities, and may divide the predetermined time period into a plurality of time periods based on the analyzed pattern.

That is, the controller 130 may not simply divide the user's activities performed during the predetermined time by times when the activities are performed, but may divide the user's activities into time periods that are meaningful to the user according to the pattern of the user's activities.

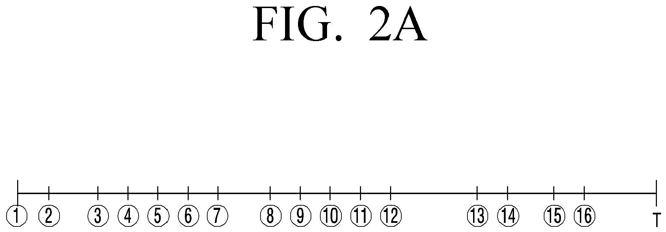

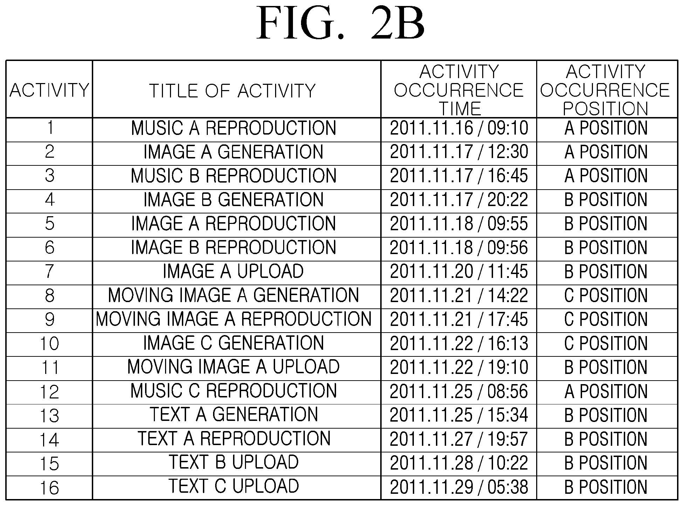

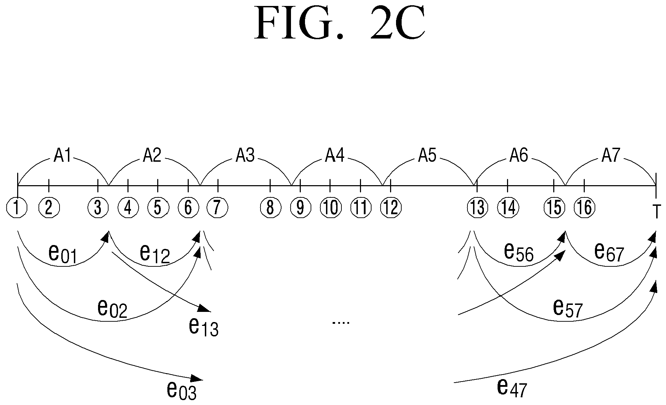

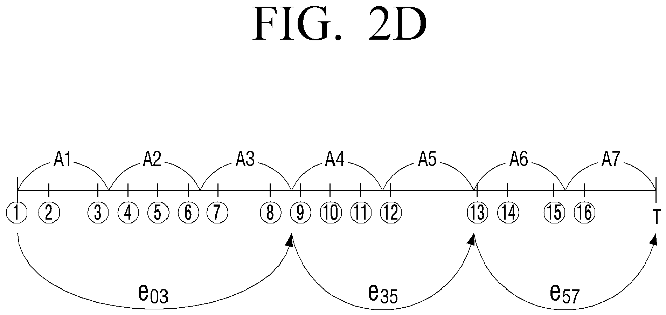

Hereinafter, referring to FIG. 2, a method for dividing the time period when the activities occur into time periods that are meaningful to the user according to the user's activities will be described.

For example, as shown in FIG. 2A, it is assumed that 16 activities occur in the order of time during a predetermined time period T. In this case, the storage 120 may store information regarding activity titles, activity occurrence times, and activity occurrence positions as shown in FIG. 2B.

The controller 130 may divide the predetermined time period into a plurality of unit time periods, analyze a pattern of the user's activities belonging to at least one successive unit time period, and divide the predetermined time period into the at least one successive unit time period based on the result of the analysis.

Here, the unit time period may be determined by the user, and may be a time period that is smaller than the predetermined time period. For example, the controller 130 may divide the predetermined time period T as shown in FIG. 2C into A1, A2, ..., and A7.

First, in order to analyze the pattern of the user's activities, the controller 130 calculates activity costs C(Si) during the at least one successive unit time period through Equation 1 below.

[Equation 1]

$$C(S_i) = c(a_1^i a_2^i \cdots a_{n_i}^i \mid n, u, t, d) = \alpha \cdot \sum_{j=1}^{n_i} \log \frac{n_i + u}{f_i(a_j^i) + 1} + \beta \cdot \log(t_j^i) + \gamma \cdot \log(d_j^i) + \delta \log n$$

$$(\alpha + \beta + \gamma + \delta = 1)$$

Here, $f_i(a_j^i)$ denotes the frequency of an activity $j$ ($j$ is a natural number) belonging to $Ai$ (unit time periods, where $i$ is a natural number), $ni$ denotes the number of activities belonging to $Ai$, $n$ denotes the total number of activities belonging to the perdetermined time period, and $u$ denotes the number of different activities belonging to the predetermined time period.

Further, $t_j^i$ denotes a time difference occurring between an activity $j$ and an activity $j$-1, and $d_j^i$ denotes a distance between positions where the activity $j$ and the activity $j$ -1 occur. Specifically, $t_j^i$ denotes the time difference between the time when the last activity belonging to $Ai$ occurs and the time when the initial activity occurs, and $d_j^i$ denotes the distance between the position where the last activity belonging to $Ai$ occurs and the position where the initial activity occurs. Accordingly, if only one activity belongs to $Ai$, $t_j^i$ and and $d_j^i$ may become 0.

For example, in the case as shown in FIG. 2C, the controller 130 calculates an activity cost (e01 in FIG. 2C) in a first unit time period A1 based on activity occurrence times, activity occurrence positions, and the frequency of activities, which belong to the first unit time period A1. Further, the controller 130 calculates an activity cost (e12 in FIG. 2C) in a second unit time period A2 based on activity occurrence times, activity occurrence positions, and the frequency of activities, which belong to the second unit time period A2. Further, the controller 130 calculates the activity cost (e02 in FIG. 2C) in a time period A1+A2, which is obtained by adding the first unit time period A1 and the second unit time period A2 to each other, based on activity occurrence times, activity occurrence positions, and the frequency of activities, which belong to the time period A1+A2. The controller 130 calculates all activity costs during at least one successive unit time period in the predetermined time period through repeating the above-described process.

Then, the controller 130 may divide the predetermined time period into the at least one successive unit time period so that the sum of the calculated activity costs is minimized. Specifically, the controller 130 sums the activity costs which are calculated in the at least one successive unit time period obtained by dividing the predetermined time period without overlapping each other. Then, the controller 130 divides the predetermined time period into the at least one successive unit time period, in which the sum of the activity costs is minimized.

That is, in an example as described above, the controller 130 calculates e01+e17, e01+e12+e27, e01+e13+e37, ..., determines a case where the activity cost is minimized, and divides the predetermined time period T so that the activity cost is minimized.

For example, if the sum of the activity cost e03 in the time period A1+A2+A3 obtained by adding the first unit time period A1 through the third unit time period A3, the activity cost e35 in the time period A4+A5 obtained by adding the fourth unit time period A4 and the fifth unit time period A5, and the activity cost e57 in the time period A6+A7 obtained by adding the sixth unit time period A6 and the seventh unit time period A7, is minimized, that is, the sum e03+e35+e57 is minimized, the controller 130 may divide the predetermined time period T as shown in FIG. 2D. That is, the controller 130 may divide the predetermined time period T into three periods: a first time period A1+A2+A3 including the first unit time period A1 through the third unit time period A3, a second time period A4+A5 including the fourth unit time period A4 and the fifth unit time period A5, and a third time period A6+A7 including the sixth unit time period A6 and the seventh unit time period A7.

As described above, the controller 130 may analyze the pattern of the user's activities based on at least one of user's activity occurrence times, user's activity occurrence positions, and the frequency of user's activities, which belong to the at least one successive unit time period. That is, in the case of dividing the predetermined time period into the plurality of time periods so that the activity costs are minimized, the controller 130 may determine that the activities belonging to the respective time periods are activities which are performed during the time period that is meaningful to the user from the viewpoint of the activities.

Further, the controller 130 may control the display 110 to display the information regarding the activities that belong to the respective divided time periods. That is, the controller 130 may control the display 110 to display a UI screen that includes the information regarding the activities for the respective divided time periods.

Specifically, the controller 130 may display the information related to the activities that belong to the respective time periods and information related to an application executed to perform the activities for the respective time periods. In this case, the controller 130 may display time information regarding the respective time periods together.

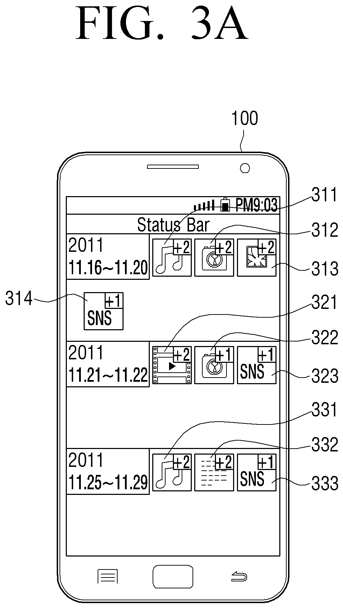

Hereinafter, referring to FIGS. 3A to 3C, a method for displaying information regarding activities for the respective time periods will be described.

In particular, FIGS. 3A to 3C illustrate that the display apparatus 100 is implemented by a smart phone, and the display states of the information regarding the activities that belong to the respective time periods are displayed in the case where the predetermined time period is divided into the first to third time periods as shown in FIGS. 2A to 2D.

First, the controller 130 may display a menu that is related to an application program executed to perform the activities that belong to the respective time periods for the respective time periods.

For example, as shown in FIG. 3A, the controller 130 may display a menu 311 which corresponds to a music application program that is executed to reproduce music A and music B in the first time period, that is, the first to third unit time periods A1 to A3, a menu 312 which corresponds to a camera application program that is executed to generate image A and image B, a menu 313 which corresponds to an album application program that is executed to reproduce image A and image B, and a menu 314 which corresponds to an SNS providing application program that is executed to upload image A.

In the same manner, the controller 130 may display a menu 321 which corresponds to a moving image application program that is executed to generate and reproduce moving image A in the second time period, that is, the fourth unit time period A4 and the fifth unit time period A5, a menu 322 which corresponds to a camera application program that is executed to generate image C, and a menu 323 which corresponds to an SNS providing application program that is executed to upload moving image A.

Further, the controller 130 may display a menu 331 which corresponds to a music application program that is executed to reproduce music C in the third time period, that is, the sixth unit time period A6 and the seventh unit time period A7, a menu 332 which corresponds to a memo application program that is executed to generate and reproduce text A, and a menu 333 which corresponds to an SNS providing application program that is executed to upload text B.

In these cases, the controller 130 may display time information regarding the respective time division together. For example, the controller 130 may display time information regarding the first time period, that is, 2011. 11. 16 ∼ 2011. 11. 20, together with icons 311 to 314, time information regarding the second time period, that is, 2011. 11. 21 ∼ 2011. 11. 22, together with icons 321 to 323, and time information regarding the third time period, that is, 2011. 11. 25 ∼ 2011. 11. 29, together with icons 331 to 333. Accordingly, users can confirm the time period that is meaningful to the users is from the viewpoint of the activities.

Further, the controller 130 may display the number of activities performed through the respective application programs to overlap the menu which corresponds to the application program. For example, the controller 130 may display "+2", which indicates that music A and music B are reproduced in the first time period, to overlap the menu 311 related to the music application program. Accordingly, the users can determine the number of activities performed through the respective application program.

On the other hand, the controller 130 may display information that is related to the activities that belong to the respective time periods for the respective time periods. Specifically, the controller 130 may display at least one of titles of the activities executed in the respective time periods, execution times, execution positions, the number of executions, detailed information, and thumbnail images. In this case, the controller 130 may also display a menu which corresponds to application programs executed to perform the respective activities.

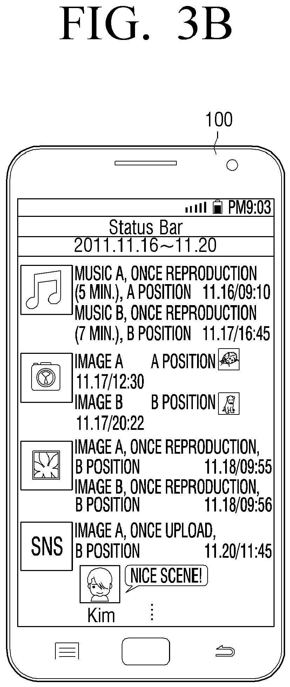

For example, as shown in FIG. 3B, the controller 130 may display titles, the number of reproductions, durations, reproduction positions, and reproduction times of music A and music B, which are reproduced in the first time period, that is, the first unit time period A1 to third unit time periods A3, display titles, generation positions, thumbnail images, and generation times of generated image A and image B, and display titles, the number of reproductions, reproduction positions, and reproduction times of the reproduced image A and image B.

Further, the controller 130 may display the title, the number of uploads, the upload position, and the upload time of the uploaded image A. In this case, the controller 130 may display both the SNS account information to which image A is uploaded and the text that is uploaded together with the image A.

On the other hand, although FIG. 3B illustrates that only the information related to the activities which belong to the first time period is displayed, the controller 130 may operate to display the information related to the activities which belong to the respective time periods in the same manner with respect to other time periods.

In the above-described exemplary embodiments, if a menu that corresponds to an application program or the information related to the activities is selected, the controller 130 may re-perform the activities performed in the respective time periods, or display detailed information regarding the activities performed in the respective time periods or the result of the activity performance.

For example, if the menu 311 is selected in FIG. 3A, the controller 130 may sequentially reproduce music A and music B, or display a list including music A and music B and reproduce music selected on the list. Further, if the menu 311 is selected in FIG. 3A, the controller 130 may display the information related to the respective activities, such as titles, the number of reproductions, reproduction times, reproduction positions, and reproduction durations of music A and music B.

As another example, if information regarding image A that is uploaded to an SNS server is selected in FIG. 3B, the controller 130 may access the SNS server and display an execution screen of the SNS accounts to which image A is uploaded.

On the other hand, the controller 130 may extract at least a part of the activities belonging to the respective divided time periods based on the preference of the activities, and control to display the extracted information regarding the activities.

Here, the preference is a user's or another user's preference, and may be collected in various methods.

Specifically, the preference may be collected through a predetermined labeling method that can give the preference. For example, the preference of the corresponding content may be input through a UI menu of the labeling method that is provided with respect to specific content.

Further, the preference may be collected through the user's activity with respect to specific content. For example, the preference may be collected through various setting operations of the content, edition operation of the content, and sharing operation of the content. That is, in the case where the content is set as a background screen, the specific content is executed over a predetermined number of times, or the specific content is transmitted to another user, the preference may be given to the corresponding content. In this case, the user's preference may be given to the content of which the operation is performed over the predetermined number of times.

Further, another user's preference that is pre-collected may be received from an outside. For example, another user's preference that is collected from a server (not illustrated), such as an SNS server and a content providing server, may be received from the corresponding server. That is, another user's preference may be given on the basis of the number of times the specific content is downloaded by another user from a content providing server, the number of times another user recommends the specific content, or the number of comments that are given to the specific content in the SNS server. In this case, another user's preference may be given to the content which is downloaded or recommended over a predetermined number of times or to which comments are given over a predetermined number of times.

Accordingly, the controller 130 may extract at least a part of the activities belonging to the respective time periods based on the collected preference. Specifically, the controller 130 may determine the activities, such as execution, generation, transmission, or reception of the content to which the preference is given among the activities belonging to the respective time periods, or display the information regarding the corresponding activity for the respective time periods.

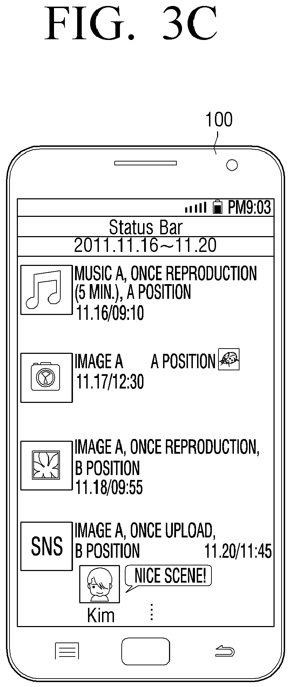

For example, it is assumed that the preference is given to music A based on the number of downloads by another user and the preference is given to image A uploaded to the SNS server based on the number of comments given by another user in the exemplary embodiment of FIGS. 3A to 3C. In this case, the controller 130, as shown in FIG. 3C, may display the information regarding the activities related to music A and image A to which preferences are given.

On the other hand, although FIG. 3C illustrates that the information regarding the generation, reproduction, and upload of image A, this is merely exemplary. That is, the controller 130 may display only the information related to the activities to which the preference is given. On the point that the preference is given to the uploaded image A in the above-described example, the controller 130 may not display the information regarding the generation and reproduction of image A with respect to image A, but may display only the information regarding the activity that uploads image A to the SNS server.

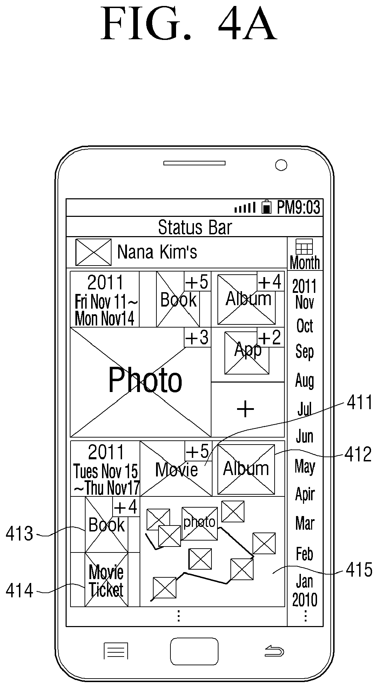

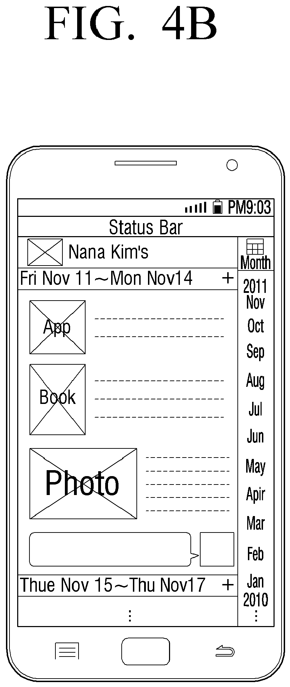

FIGS. 4A and 4B are diagrams explaining another example of a method for displaying information regarding activities for respective time periods according to an exemplary embodiment of the present disclosure.

As shown in FIG. 4A, the controller 130 may display menus that correspond to application programs executed to perform the activities belonging in the respective time periods for the respective time periods.

In this case, the controller 130 may display the menu that corresponds to the application program executed to perform the activity together with the information related to the activities. For example, as shown in FIG. 4A, the controller 130 may display a menu 411 which corresponds to a movie application program that is executed to perform the activities, a menu 412 which corresponds to an album application program, an e-book application program, and a menu 414 which corresponds to an application program related to movie reservation together with images 415 generated through an application program.

Further, as shown in FIG. 4B, the controller 130 may display the information related to the activities belonging to the respective time periods for the respective time periods. Here, a detailed method for displaying information regarding activities is the same as that in FIGS. 3A to 3C. However, the controller 130 may display the information regarding the activities for user information as shown in FIGS. 4A and 4B.

Specifically, the controller 130 may display a UI screen for inputting user information (e.g., ID and password), and if the user information is input through the corresponding UI screen, the controller 130 may store the information regarding the activities for the input user information in the storage 120. That is, if the activity is performed through the display apparatus 100 after the user information is input, the controller 130 may store the information regarding the activity through matching with the corresponding user information.

Thereafter, the controller 130 may determine the information regarding the activities that match with the input user information, and divide and display the information regarding the activities for the time periods that are meaningful to the user. An example illustrated in FIGS. 4A and 4B corresponds to a case where the information regarding the user activities having an ID "Nana Kim" is displayed. As described above, the controller 130 may store the information regarding the activities for the user information, and provide the information regarding to the activities to match with the user information for the meaningful time periods.

On the other hand, the storage 120 may store the application programs that can provide the information regarding the activities for the time periods. Accordingly, if the corresponding application is executed, the controller 130 may display the information regarding the activities for the time periods that are meaningful to the user.

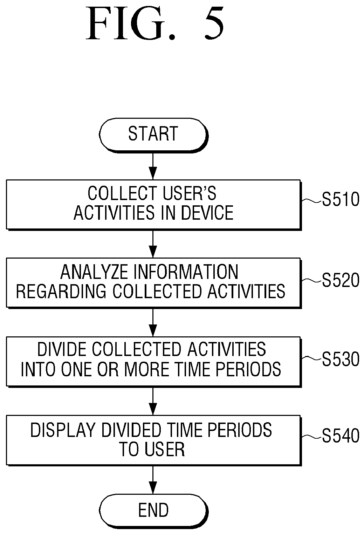

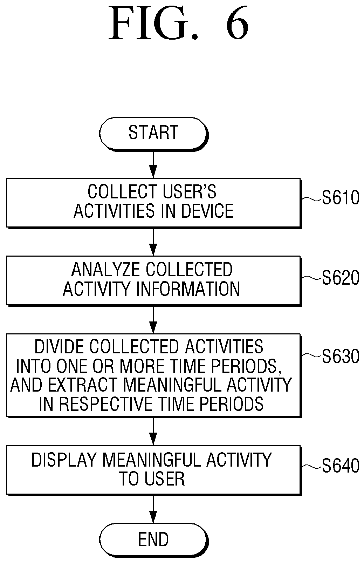

FIGS. 5 and 6 are flowcharts illustrating a method for displaying information regarding activities according to an exemplary embodiment of the present disclosure. Referring to FIGS. 5 and 6, a schematic flow of a method for displaying the information regarding the activities will be described.

First, as shown in FIG. 5, the controller 130 collects the user's activities (S510 and S610). Then, the control unit 130 analyzes the information regarding the collected activities (S520 and S620), divides the collected activities into one or more time periods, and extracts meaningful activities in the respective time periods (S530 and S630). Here, the meaningful activities may be extracted based on the preference. Further, the controller 130 may display the extracted activities in the respective divided time periods in various methods (S540 and S640).

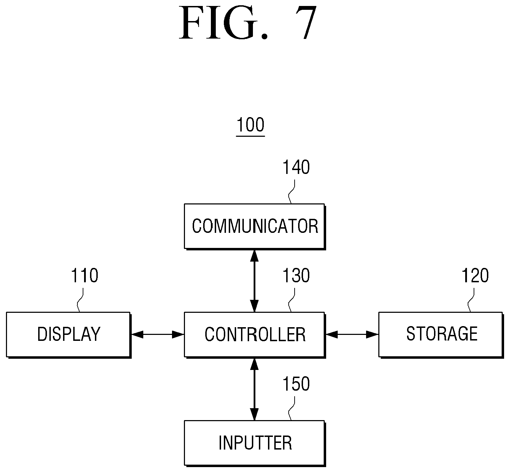

FIG. 7 is a block diagram illustrating the detailed configuration of the display apparatus according to an exemplary embodiment of the present disclosure. Referring to FIG. 7, the display apparatus 100 may further include a communicator 140 and an inputter 150 in addition to the constituent elements illustrated in FIG. 1, and the operation thereof can be controlled by the controller 130.

The communicator 140 may connect the display apparatus 100 to the external device (e.g., various kinds of servers and other devices) (not illustrated). For example, the communicator 140 may connect the display apparatus 100 to the external device (not illustrated) using various communication methods, such as wired/wireless LAN (Local Area Network), WAN, Ethernet, Bluetooth, Zigbee, USB (Universal Serial Bus), IEEE 1394, and Wi-Fi. For this, the communicator 140 may be provided with communication modules corresponding to the respective communication methods. For example, in the case of performing communication in the wired LAN method, the communicator 140 may be provided with a wired LAN card (not illustrated). Further, in the case of performing communication in the Wi-Fi method, the communicator 140 may be provided with a Wi-Fi communication module (not illustrated).

Further, the communicator 140 may receive the information regarding the activities through communication with the external device (not illustrated). Specifically, the controller 130 may request transmission of the information regarding the activities from the external device (not illustrated), and store the information regarding the activities received from the external device (not illustrated) in the storage 120. In this case, the controller 130 may store the information regarding the received activities in the storage 120 for the user information.

Accordingly, the controller 130 may control to display the information regarding the activities performed via the display apparatus 100, which is stored in the storage 120, and the information regarding the activities performed in the external device (not illustrated) for the time periods that are meaningful to the user.

Further, the controller 130 may control the communicator 140 to transmit the information regarding the activities, which is stored in the storage 120, to the external device (not illustrated). For example, the controller 130 may transmit the information regarding the activities, which is stored in the storage 120, to the external device (not illustrated), and control the external device (not illustrated) to perform backup of the information regarding the activities.

The inputter 150 receives an input of various user commands. The controller 130 may perform functions that correspond to the user command input through the inputter 150. For example, the controller 130 may perform content execution, generation, transmission, and reception according to the user command input through the inputter 150.

For this, the inputter 150 may be implemented by an input panel. The input panel may be implemented by a touch panel or a keypad including various kinds of function keys, numerical keys, special keys, and character keys.

In particular, the inputter 150 may be implemented in the touch screen type together with the display 110. In this case, the display 110 may display a GUI for inputting the user command.

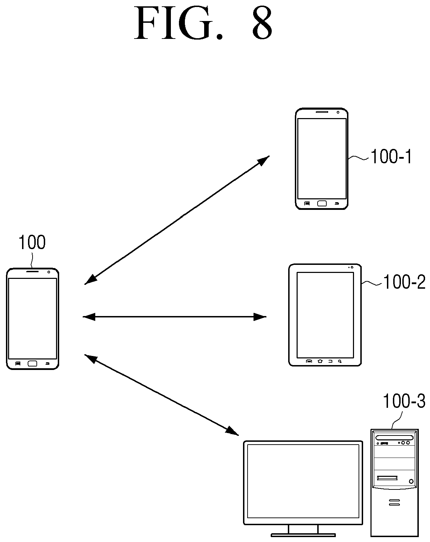

FIG. 8 is a diagram explaining an example where a display device provides information regarding activities to a user in association with an external device according to an exemplary embodiment of the present disclosure.

Referring to FIG. 8, the display apparatus 100 may receive the information regarding the activities, which are performed by other devices, from external devices, that is, a first device 100-1, a second device 100-2, and a third device 100-3. Accordingly, the display apparatus 100 may synthesize the information regarding the user's activities performed in various devices and provide the synthesized information to the user.

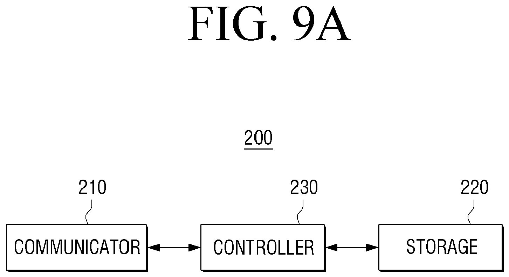

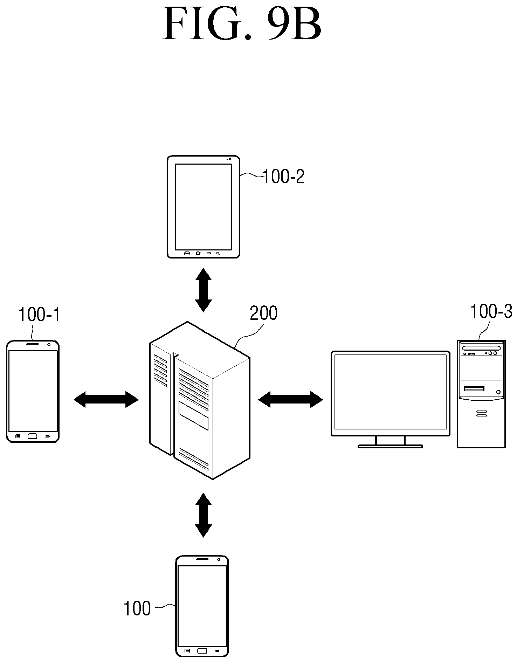

In the above-described exemplary embodiments, it is described that the display apparatus 100 divides the activities into time periods that are meaningful to the user and provides the divided activities to the user. However, such operations may be performed by a server (not illustrated) as in FIG. 9.

FIGS. 9A and 9B are diagrams explaining a server according to an exemplary embodiment of the present disclosure.

First, FIG. 9A is a block diagram illustrating the configuration of a server 200 according to an exemplary embodiment of the present disclosure. Referring to FIG. 9A, the server 200 includes a communicator 210, a storage 220, and a controller 230.

The communicator 210 may connect the server 200 to the external device (not illustrated). Further, the communicator 210 may receive the information regarding the activities, which are performed by the respective devices, from the first device 100-1, the second device 100-2, the third device 100-3, and the display apparatus 100.

The storage 220 stores the information regarding the activities that are received from the external devices (e.g., 100, 100-1, 100-2, and 100-3). Here, the activities may include at least one of content execution, content generation, content transmission, and content reception.

The controller 230 may analyze the pattern of the user's activities performed during the predetermined time based on the information regarding the activities, and may divide the predetermined time period into a plurality of time periods based on the analyzed pattern. Since this is the same as the operation performed by the display device 100, the detailed description thereof will be omitted.

On the other hand, the controller 230 transmits the plurality of time periods divided on the basis of the analyzed pattern and the information regarding the activities belonging to the respective time periods to the display apparatus 100. Accordingly, the display apparatus 100 may display a UI screen that includes the information regarding the activities divided for the respective time periods based on the received information.

Further, the controller 230 may construct the UI screen based on the plurality of time periods divided on the basis of the analyzed pattern and the information regarding the activities belonging to the respective time periods, and transmit screen data that corresponds to the constructed UI screen to the display apparatus 100. In this case, the display apparatus 100 may display the UI screen using the received screen data.

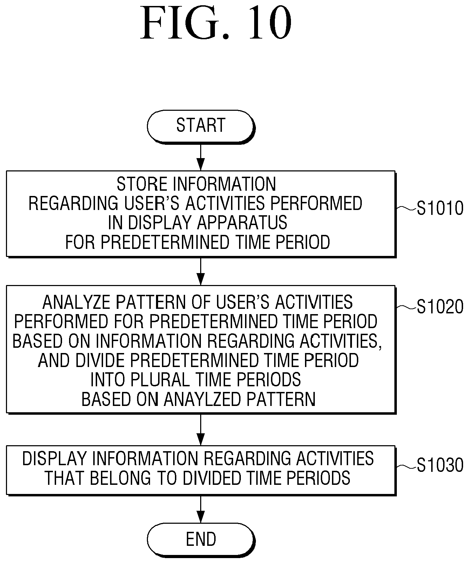

FIG. 10 is a flowchart illustrating a method for displaying information regarding activities of a display device according to an exemplary embodiment of the present disclosure.

First, the information regarding the user's activities performed in the display apparatus for the predetermined time period is stored (S1010). Here, the activities may include at least one of content execution, content generation, content transmission, and content reception, and the information regarding the activities may include at least one of times when the activities occur, the number of times the activities occur, and positions where the activities occur.

Thereafter, the pattern of the user's activities performed for the predetermined time period based on the information regarding the activities is analyzed, and the predetermined time period is divided into the plurality of time periods based on the analyzed pattern (S1020).

Specifically, the predetermined time period is divided into the plurality of unit time periods, the pattern of the user's activities which belong to at least one successive unit time period is analyzed, and the predetermined time period is divided into the at least one successive unit time period based on the result of the analysis.

Here, the pattern of the user's activities may be divided based on at least one of times when the user's activities occur, positions where the user's activities occur, and the number of times the user's activities occur, which belong to the at least one successive unit time period. Specifically, activity costs are calculated for the at least one successive unit time period through a following equation to analyze the pattern of the user's activities, and the predetermined time period is divided into the at least one successive unit time period so that the sum of the calculated activity costs is minimized.

$$C(S_i) = c(a_1^i a_2^i \cdots a_{n_i}^i \mid n,u,t,d) = \alpha \cdot \sum_{j=1}^{n_i} \log \frac{n_i + u}{f_i(a_j^i)+1} + \beta \cdot \log(t_j^i) + \gamma \cdot \log(d_j^i) + \delta \log n$$

Here, $f_i(a_j^i)$ denotes the frequency of an activity $j$ ($j$ is a natural number) belonging to $Ai$ (unit time periods, where $i$ is a natural number), $ni$ denotes the number of activities belonging to $Ai$, $n$ denotes the number of activities belonging to a perdetermined time period, and $u$ denotes the number of different activities belonging to the predetermined time period. Further, $t_j^i$ denotes a time difference occurring between an activity $j$ and an activity $j$-1, and $d_j^i$ denotes a distance between positions where the activity $j$ and the activity $j$ -1 occur.

Then, the information regarding the activities belonging to the respective divided time periods is displayed (S1030). In this case, at least a part of the activities belonging to the respective divided time periods is extracted on the basis of the preference of the activities, and the information regarding the extracted activities is displayed.

This has been described in detail with reference to FIGS. 1 to 8.

Further, a non-transitory computer readable medium, in which a program that successively performs the display method according to the present disclosure is stored, may be provided.

The non-transitory computer readable medium means a device-readable medium which does not store data for a short time, such as a register, a cache, and a memory, but semi-permanently stores the data. Specifically, the above-described various applications or programs may be provided and stored in the non-transitory computer readable medium, such as a compact disc (CD), a digital versatile disc (DVD), a hard disk, a Blu-ray disk, a universal serial bus (USB), a memory card, and a read-only memory (ROM).

Further, although a bus is not illustrated in the above-described block diagram illustrating the display apparatus, communication between respective constituent elements in the display apparatus may be performed through the bus. Further, the display device may further include a processor, such as a CPU or a microprocessor, which performs the above-described various steps.

While the present disclosure has been shown and described with reference to certain exemplary embodiments thereof, it will be understood by those skilled in the art that various changes in form and detail may be made therein without departing from the spirit and scope of the present disclosure, as defined by the appended claims.

The invention might include, relate to, and/or be defined by, the following aspects:

1. A display apparatus comprising:

a display;
a storage which is configured to store information regarding user activities for a time period; and
a controller which is configured to analyze a pattern of the user activities performed for the time period based on the information regarding the user activities, divide the time period into a plurality of time periods based on the analyzed pattern, and control the display to display the information regarding the user activities that belong to the respective divided time periods.

2. The display apparatus as claimed in aspect 1, wherein the user activities comprise at least one from among content execution, content generation, content transmission, and content reception, and
the information regarding the user activities comprises at least one from among times when the user activities occur, a number of times the user activities occur, and positions where the user activities occur.

3. The display apparatus as claimed in aspect 1 or 2, wherein the controller divides the time period into a plurality of unit time periods, analyzes a pattern of user activities which belong to at least one successive unit time period, and divides the time period into the at least one successive unit time period based on a result of the analysis.

4. The display apparatus as claimed in aspect 3, wherein the controller analyzes the pattern of the user activities based on at least one from among times when the user activities occur, positions where the user activities occur, and a number of times the user activities occur, which belong to the at least one successive unit time period.

5. The display apparatus as claimed in aspect 4, wherein the controller calculates activity costs for the at least one successive unit time period through an equation to analyze the pattern of the user activities, and divides the d time period into the at least one successive unit time period so that a sum of the calculated activity costs is minimized, the equation being:

$$C(S_i) = c(a_1^i a_2^i \cdots a_{n_i}^i \mid n,u,t,d) = \alpha \cdot \sum_{j=1}^{n_i} \log \frac{n_i + u}{f_i(a_j^i) + 1} + \beta \cdot \log(t_j^i) + \gamma \cdot \log(d_j^i) + \delta \log n$$

where, $f_i(a_j^i)$ denotes a frequency of an activity $j$ ($j$ is a natural number) belonging to $Ai$ (unit time periods, where $i$ is a natural number), $ni$ denotes the number of activities belonging to $Ai$, $n$ denotes the number of activities belonging to a predetermined time period, $u$ denotes the number of different activities belonging to the predetermined time period, $t_j^i$ denotes a time difference occurring between an activity $j$ and an activity $j$ -1, and $d_j^i$ denotes a distance between positions where the activity $j$ and the activity $j$ -1 occur.

6. The display apparatus as claimed in anyone of aspects 1 to 5, wherein the controller extracts at least a part of the user activities belonging to the respective divided time periods based on a preference of the user activities, and controls the display to display the information regarding the extracted activities.

7. A method for displaying information regarding activities of a display apparatus, comprising:

storing information regarding user activities performed in the display apparatus for a d time period;
analyzing a pattern of the user activities performed for the d time period based on the information regarding the activities, and dividing the d time period into a plurality of time periods based on the analyzed pattern; and
displaying the information regarding the user activities that belong to the respective divided time periods.

8. The method for displaying information regarding activities as claimed in aspect 7, wherein the user activities comprise at least one from among content execution, content generation, content transmission, and content reception, and
the information regarding the user activities comprises at least one from among times when the user activities occur, a number of times the user activities occur, and positions where the user activities occur.

9. The method for displaying information regarding activities as claimed in aspect 7 or 8, wherein the dividing comprises dividing the d time period into a plurality of unit time periods, analyzing a pattern of user activities which belong to at least one successive unit time period, and dividing the d time period into the at least one successive unit time period based on a result of the analysis.

10. The method for displaying information regarding activities as claimed in aspect 9, wherein the dividing comprises analyzing the pattern of the user activities based on at least one from among times when the user activities occur, positions where the user activities occur, and a number of times the user's activities occur, which belong to the at least one successive unit time period.

11. The method for displaying the information regarding activities as claimed in aspect 10, wherein the dividing comprises calculating activity costs for the at least one successive unit time period through an equation to analyze the pattern of the user activities, and dividing the d time period into the at least one successive unit time period so that a sum of the calculated activity costs is minimized, the equation being:

$$C(S_i) = c(a_1^i a_2^i \cdots a_{n_i}^i \mid n,u,t,d) = \alpha \cdot \sum_{j=1}^{n_i} \log \frac{n_i + u}{f_i(a_j^i) + 1} + \beta \cdot \log(t_j^i) + \gamma \cdot \log(d_j^i) + \delta \log n$$

where, $f_i(a_j^i)$ denotes the frequency of an activity $j$ ($j$ being a natural number) belonging to $Ai$ (unit time periods, where $i$ is a natural number), $ni$ denotes the number of activities belonging to $Ai$, $n$ denotes the number of activities belonging to a predetermined time period, $u$ denotes the number of different activities belonging to the predetermined time period, $t_j^i$ denotes a time difference occurring between an activity $j$ and an activity $j$ -1, and $d_j^i$ denotes a distance between positions where the activity $j$ and the activity $j$ -1 occur.

12. The method for displaying information regarding activities as claimed in anyone of aspects 7 to 11, wherein the displaying comprises extracting at least a part of the activities belonging to the respective divided time periods based on a preference of the activities, and displaying the information regarding the extracted activities.

**Claims**

1. A method for displaying timeline information regarding activities of a user performed in one or more devices, of a display device distinct from the one or more devices, the method comprising:

   obtaining, from an external device distinct from the display device, information regarding the activities of the user performed in the one or more devices; and
   displaying a timeline of the activities of the user based on the obtained information,
   wherein the displayed timeline is divided into a plurality of time periods and comprises, for each of the plurality of time periods:

   time period information indicating a respective time period among the plurality of time periods, and
   user activity information corresponding to one or more user activities in the respective time period, and

   wherein the user activity information comprises, for each user activity, an image, application information indicating an application used to perform the user activity, and title information of content with respect to which the user activity is performed.

2. The method according to claim 1, wherein based on the obtained information comprising information regarding an image content viewing activity of the user, the user activity information comprises a thumbnail of an image viewed in the image content viewing activity.

3. The method according to claim 1, wherein based on the obtained information comprising information regarding an image content viewing activity of the user, the user activity information comprises a file name of an image viewed in the image content viewing activity.

4. The method according to claim 1, wherein the obtaining the information comprises:

   authenticating the user via a user identifier (ID) and password; and
   obtaining, from the external device, the information regarding the activities of the authenticated user performed in the one or more devices.

5. The method according to claim 4, wherein the authenticating the user comprises:

   displaying a user interface screen for receiving inputs of user information; and
   receiving, via the user interface screen, the user ID and the password.

6. The method according to claim 1, further comprising transmitting, from the display device to the external device, information regarding activities of the user performed in the display device.

7. The method according to claim 6, wherein the transmitting comprises:

   authenticating the user via a user identifier (ID) and password; and
   transmitting, to the external device, the information regarding the activities of the authenticated user performed in the display device.

8. The method according to claim 1, wherein, for a time period among the plurality of time periods, the displayed user activity information corresponds to a subset of user activities in the time period.

9. The method according to claim 8, wherein the subset of user activities is determined based on predetermined display preference information.

10. The method according to claim 1, further comprising displaying, in the display device, a timeline of activities of the user based on the obtained information and information regarding activities of the user performed in the display device.

11. A display device for displaying timeline information regarding activities of a user performed in one or more devices, distinct from the display device, the display device comprising:

a memory storing instructions; and
at least one hardware processor configured to execute the instructions to at least:

control to obtain, from an external device distinct from the display device, information regarding the activities of the user performed in the one or more devices; and
control to display a timeline of the activities of the user based on the obtained information,

wherein the displayed timeline is divided into a plurality of time periods and comprises, for each of the plurality of time periods:

time period information indicating a respective time period among the plurality of time periods, and
user activity information corresponding to one or more user activities in the respective time period, and

wherein the user activity information comprises, for each user activity, an image, application information indicating an application used to perform the user activity, and title information of content with respect to which the user activity is performed.

12. The display device according to claim 11, wherein based on the obtained information comprising information regarding an image content viewing activity of the user, the user activity information comprises a thumbnail of an image viewed in the image content viewing activity.

13. The display device according to claim 11, wherein based on the obtained information comprising information regarding an image content viewing activity of the user, the user activity information comprises a file name of an image viewed in the image content viewing activity.

14. The display device according to claim 11, wherein the at least one hardware processor is configured to:

authenticate the user via a user identifier (ID) and password; and
control to obtain, from the external device, the information regarding the activities of the authenticated user performed in the one or more devices.

15. The display device according to claim 14, wherein the at least one hardware processor is configured to:

control to display a user interface screen for receiving inputs of user information; and
control to receive, via the user interface screen, the user ID and the password.

# FIG. 1

100

110                      130                      120

| DISPLAY | ←→ | CONTROLLER | ←→ | STORAGE |

# FIG. 2A

```
 ①  ②     ③  ④  ⑤  ⑥  ⑦     ⑧  ⑨  ⑩  ⑪  ⑫        ⑬  ⑭     ⑮  ⑯          T
```

# FIG. 2B

| ACTIVITY | TITLE OF ACTIVITY | ACTIVITY OCCURRENCE TIME | ACTIVITY OCCURRENCE POSITION |
|---|---|---|---|
| 1 | MUSIC A REPRODUCTION | 2011.11.16 / 09:10 | A POSITION |
| 2 | IMAGE A GENERATION | 2011.11.17 / 12:30 | A POSITION |
| 3 | MUSIC B REPRODUCTION | 2011.11.17 / 16:45 | A POSITION |
| 4 | IMAGE B GENERATION | 2011.11.17 / 20:22 | B POSITION |
| 5 | IMAGE A REPRODUCTION | 2011.11.18 / 09:55 | B POSITION |
| 6 | IMAGE B REPRODUCTION | 2011.11.18 / 09:56 | B POSITION |
| 7 | IMAGE A UPLOAD | 2011.11.20 / 11:45 | B POSITION |
| 8 | MOVING IMAGE A GENERATION | 2011.11.21 / 14:22 | C POSITION |
| 9 | MOVING IMAGE A REPRODUCTION | 2011.11.21 / 17:45 | C POSITION |
| 10 | IMAGE C GENERATION | 2011.11.22 / 16:13 | C POSITION |
| 11 | MOVING IMAGE A UPLOAD | 2011.11.22 / 19:10 | B POSITION |
| 12 | MUSIC C REPRODUCTION | 2011.11.25 / 08:56 | A POSITION |
| 13 | TEXT A GENERATION | 2011.11.25 / 15:34 | B POSITION |
| 14 | TEXT A REPRODUCTION | 2011.11.27 / 19:57 | B POSITION |
| 15 | TEXT B UPLOAD | 2011.11.28 / 10:22 | B POSITION |
| 16 | TEXT C UPLOAD | 2011.11.29 / 05:38 | B POSITION |

# FIG. 2C

# FIG. 2D

# FIG. 3A

# FIG. 3B

100

# FIG. 3C

100

ıılll 🔋 PM9:03

Status Bar
2011.11.16~11.20

MUSIC A, ONCE REPRODUCTION
(5 MIN.), A POSITION
11.16/09:10

IMAGE A          A POSITION
11.17/12:30

IMAGE A, ONCE REPRODUCTION,
B POSITION
11.18/09:55

SNS   IMAGE A, ONCE UPLOAD,
      B POSITION          11.20/11:45

NICE SCENE!

Kim          ⋮

# FIG. 4A

# FIG. 4B

Status Bar

Nana Kim's

Month

Fri Nov 11~Mon Nov14 +

App

Book

Photo

2011
Nov
Oct
Sep
Aug
Jul
Jun
May
Apir
Mar
Feb
Jan
2010

Thue Nov 15~Thu Nov17 +

# FIG. 5

```
        ┌─────────────┐
        │    START     │
        └──────┬──────┘
               ↓
   ┌──────────────────────┐
   │    COLLECT USER'S      │ ~S510
   │  ACTIVITIES IN DEVICE  │
   └──────────┬───────────┘
               ↓
   ┌──────────────────────┐
   │  ANALYZE INFORMATION   │ ~S520
   │ REGARDING COLLECTED    │
   │      ACTIVITIES        │
   └──────────┬───────────┘
               ↓
   ┌──────────────────────┐
   │ DIVIDE COLLECTED       │ ~S530
   │ ACTIVITIES INTO ONE    │
   │ OR MORE TIME PERIODS   │
   └──────────┬───────────┘
               ↓
   ┌──────────────────────┐
   │ DISPLAY DIVIDED TIME   │ ~S540
   │ PERIODS TO USER        │
   └──────────┬───────────┘
               ↓
        ┌─────────────┐
        │     END      │
        └─────────────┘
```

# FIG. 6

```
        ┌─────────────┐
        │   START     │
        └──────┬──────┘
               │
               ▼
   ┌───────────────────────┐
   │   COLLECT USER'S      │ ～S610
   │  ACTIVITIES IN DEVICE │
   └───────────┬───────────┘
               │
               ▼
   ┌───────────────────────┐
   │   ANALYZE COLLECTED   │ ～S620
   │  ACTIVITY INFORMATION │
   └───────────┬───────────┘
               │
               ▼
   ┌───────────────────────────┐
   │  DIVIDE COLLECTED          │ ～S630
   │  ACTIVITIES INTO ONE OR    │
   │  MORE TIME PERIODS,        │
   │  AND EXTRACT MEANINGFUL    │
   │  ACTIVITY IN RESPECTIVE    │
   │  TIME PERIODS              │
   └───────────┬───────────────┘
               │
               ▼
   ┌───────────────────────┐
   │ DISPLAY MEANINGFUL     │ ～S640
   │ ACTIVITY TO USER       │
   └───────────┬───────────┘
               │
               ▼
        ┌─────────────┐
        │    END      │
        └─────────────┘
```

# FIG. 7

<u>100</u>

140

```
┌─────────────────┐
│  COMMUNICATOR   │
└─────────────────┘
```

110                130                120

```
┌──────────┐      ┌────────────┐      ┌──────────┐
│ DISPLAY  │◄────►│ CONTROLLER │◄────►│ STORAGE  │
└──────────┘      └────────────┘      └──────────┘
```

150

```
┌──────────────┐
│   INPUTTER   │
└──────────────┘
```

# FIG. 8

# FIG. 9A

200

210

230

220

| COMMUNICATOR | ←→ | CONTROLLER | ←→ | STORAGE |

# FIG. 9B

# FIG. 10

```
        ┌─────────────┐
        │    START    │
        └──────┬──────┘
               ▼
┌──────────────────────────────────┐
│        STORE INFORMATION         │
│  REGARDING USER'S ACTIVITIES     │        ~S1010
│  PERFORMED IN DISPLAY APPARATUS  │
│    FOR PREDETERMINED TIME PERIOD │
└──────────────┬───────────────────┘
               ▼
┌──────────────────────────────────┐
│  ANALYZE PATTERN OF USER'S       │
│  ACTIVITIES PERFORMED FOR        │        ~S1020
│  PREDETERMINED TIME PERIOD       │
│  BASED ON INFORMATION REGARDING  │
│  ACTIVITIES, AND DIVIDE          │
│  PREDETERMINED TIME PERIOD       │
│  INTO PLURAL TIME PERIODS        │
│  BASED ON ANAYLZED PATTERN       │
└──────────────┬───────────────────┘
               ▼
┌──────────────────────────────────┐
│  DISPLAY INFORMATION REGARDING   │
│  ACTIVITIES THAT BELONG TO       │        ~S1030
│  DIVIDED TIME PERIODS            │
└──────────────┬───────────────────┘
               ▼
        ┌─────────────┐
        │     END     │
        └─────────────┘
```

Europäisches
Patentamt

European
Patent Office

Office européen
des brevets

# EUROPEAN SEARCH REPORT

Application Number

EP 18 21 5302

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/281102 A1 (TAKAHASHI RYO [JP]) 8 November 2012 (2012-11-08) * abstract; figures 1,2 * * paragraph [0037] - paragraph [0040] * | 1-15 | INV. G06Q10/10 |
| X | US 2004/267700 A1 (DUMAIS SUSAN T [US] ET AL) 30 December 2004 (2004-12-30) * abstract * * paragraph [0058] - paragraph [0060] * * paragraph [0067] * | 1-15 | |
| X | US 2012/054795 A1 (KANG SANG-WOOK [KR] ET AL) 1 March 2012 (2012-03-01) * abstract; figures 5,9a,11,12 * | 1-15 | |
| X | US 2012/042244 A1 (SCHULMAN CONRAD ROSS [US]) 16 February 2012 (2012-02-16) * abstract; figures 3d,3e * * paragraph [0021] - paragraph [0025] * | 1-15 | |
| X | US 2004/168172 A1 (MASUDA YOSHIHIRO [JP]) 26 August 2004 (2004-08-26) * abstract; figure 1 * * paragraph [0012] - paragraph [0037] * | 1-15 | TECHNICAL FIELDS SEARCHED (IPC) G06Q |
| X | Chris Guild: "view by day or month - Learn Picasa and Google Photos!", , 11 March 2010 (2010-03-11), XP055547626, Retrieved from the Internet: URL:https://picasageeks.com/tag/view-by-day-or-month/ [retrieved on 2019-01-25] * the whole document * | 1-15 | |

The present search report has been drawn up for all claims

| Place of search | Date of completion of the search | Examiner |
|---|---|---|
| Munich | 28 January 2019 | Lopes Margarido, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 21 5302

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2019

| Patent document cited in search report | | Publication date | Patent family member(s) | | Publication date |
|---|---|---|---|---|---|
| US 2012281102 | A1 | 08-11-2012 | CN | 102713948 A | 03-10-2012 |
| | | | EP | 2533188 A1 | 12-12-2012 |
| | | | JP | WO2011093031 A1 | 30-05-2013 |
| | | | US | 2012281102 A1 | 08-11-2012 |
| | | | WO | 2011093031 A1 | 04-08-2011 |
| US 2004267700 | A1 | 30-12-2004 | US | 2004267700 A1 | 30-12-2004 |
| | | | US | 2007112742 A1 | 17-05-2007 |
| US 2012054795 | A1 | 01-03-2012 | EP | 2612456 A2 | 10-07-2013 |
| | | | KR | 20120020949 A | 08-03-2012 |
| | | | US | 2012054795 A1 | 01-03-2012 |
| | | | WO | 2012030103 A2 | 08-03-2012 |
| US 2012042244 | A1 | 16-02-2012 | NONE | | |
| US 2004168172 | A1 | 26-08-2004 | JP | 2004258802 A | 16-09-2004 |
| | | | US | 2004168172 A1 | 26-08-2004 |

EPO FORM P0459

For more details about this annex : see Official Journal of the European Patent Office, No. 12/82

**EP 3 480 757 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130029261